# EUROPEAN PATENT SPECIFICATION

(11) **EP 3 796 214 B1**
(45) Date of publication and mention of the grant of the patent: **13.08.2025**
(21) Application number: 20192672.2
(22) Date of filing: 25.08.2020
(51) Int. Cl.: G06F 18/2113, G06F 18/22, G06V 10/74, G06V 10/771, G06V 20/52

(54) **OBJECT RECOGNITION SYSTEM AND METHOD**
OBJEKTERKENNUNGSSYSTEM UND -VERFAHREN
SYSTÈME ET PROCÉDÉ DE RECONNAISSANCE D'OBJETS

(30) Priority: 17.09.2019 CN 201910879914
(43) Date of publication of application: 24.03.2021
(73) Proprietor: Tsinghua University, Haidian District, Beijing 100084 (CN); Nuctech Company Limited, TongFang Building Shuangqinglu Haidian District Beijing 100084 (CN)
(72) Inventor: ZHAO, Ziran, Beijing, 100084 (CN); GU, Jianping, Beijing, 100084 (CN); YUAN, Shaoming, Beijing, 100084 (CN); LIU, Peng, Beijing, 100084 (CN); JIAO, Yitao, Beijing, 100084 (CN); XIE, Lu, Beijing, 100084 (CN)
(74) Representative: Gunzelmann, Rainer

(56) References cited:
- CN-A- 107 820 209
- US-A1- 2015 221 151
- US-A1- 2015 347 857
- THANH KIEN NGUYEN ET AL: "Super-resolution for biometrics: A comprehensive survey", PATTERN RECOGNITION., vol. 78, 30 June 2018 (2018-06-30), GB, pages 23 - 42, XP093185004, ISSN: 0031-3203, Retrieved from the Internet <URL:https://www.sciencedirect.com/science/article/pii/S0031320318300049/pdfft?md5=ef20905233c903e4febdd539b69e48e8&pid=1-s2.0-S0031320318300049-main.pdf> [retrieved on 20240715], DOI: 10.1016/J.PATCOG.2018.01.002
- "Handbook of remote biometrics : for surveillance and security", 19 June 2009, SPRINGER, London, GB, ISBN: 978-1-84882-384-6, article ROSS ARUN ET AL: "Multibiometric Systems: Overview, Case Studies, and Open Issues", pages: 267 - 291, XP093185007
- ANONYMOUS: "Normalization (image processing)", WIKIPEDIA, 23 April 2018 (2018-04-23), pages 1 - 1, XP093179870, Retrieved from the Internet <URL:https://en.wikipedia.org/w/index.php?title=Normalization_(image_processing)&oldid=837856854> [retrieved on 20240715]

## Description

### TECHNICAL FIELD

The present disclosure relates to the field of recognition, and more particularly to a system and a method for remotely recognizing an object's identity.

### BACKGROUND

Public security is related to the stability of the country and society, and directly affects the safety of people's lives and property. In order to ensure public security, long-distance, fast, non-perception, non-cooperative personnel information collection and identity recognition technology has gradually become an inevitable trend. Traditional personnel information collection and identity recognition are close, cooperative and inefficient, especially in the peak period, which will cause serious congestion and affect people's travel.

US 2015/221151 A1 concerns a security system that integrates physical and logical security controls for the protection of secured resources. The resources may include physical locations and/or computing resources such as databases containing personal information. Information is stored in separate, codependent databases such that by isolating the components of the databases from each other, a successful attack on one component is not sufficient to enable the access of content of the other components. Biometric information is automatically obtained as users approach an access location, and is ready for expedited verification of identity upon request by the user.

CN 107 820 209A concerns an interest recommendation method, apparatus and server.

### SUMMARY

The present invention concerns a person recognition system according to claim 1, a person recognition method according to claim 4, a non-transitory computer readable medium according to claim 10, and an electronic device according to claim 11. Further aspects of the present invention are defined in the dependent claims. One of the main purposes of the present disclosure is to provide an efficient, accurate, non-perceptual, and non-cooperative personnel recognition technology, so as to provide personnel recognition technology for public transportation, major event activities, key areas and densely populated areas without affecting the traffic efficiency and accurately recognizing the identity of personnel.

In a first aspect of the present disclosure, in order to effectively and accurately recognize the identity information of pedestrians in the densely populated area, there is provided an object recognition system, comprising: an information collection module configured to acquire information about the object to be inspected; a first video acquisition module configured to acquire an image of the object to be inspected, and acquire multiple types of features of the object to be inspected by using a plurality of recognition methods based on the image of the object to be inspected; a storage module configured to store the information about the object to be inspected in association with the multiple types of features of the object to be inspected; a second video acquisition module configured to track and capture a suspect object to acquire an image of the suspect object, and acquire multiple types of features of the suspect object by using the plurality of recognition methods based on the image of the suspect object; and a recognition module configured to recognize identity information of the suspect object based on the multiple types of features of the suspect object and the multiple types of features of the object to be inspected which are stored in association with the information about the object to be inspected in the storage module.

According to the first aspect of the present disclosure, the information collection module is configured to recognize a mobile phone number of the object to be inspected based on a WiFi probe method.

According to the first aspect of the present disclosure, each of the first video acquisition module and the second video acquisition module comprises: an image capture module configured to acquire the image of the object to be inspected; and an image extraction module configured to extract a feature image of the object to be inspected from the image of the object to be inspected.

According to the first aspect of the present disclosure, each of the first video acquisition module and the second video acquisition module further comprises: a normalization module configured to normalize the feature image extracted by the image capture module.

According to the first aspect of the present disclosure, each of the first video acquisition module and the second video acquisition module further comprises: a serialization module configured to extract features based on the normalized feature image acquired by the normalization module.

According to the first aspect of the present disclosure, the recognition module comprises: a pairing module configured to pair the features of the suspect object acquired by the second video acquisition module with the features of the object to be inspected which are stored in the storage module.

According to the first aspect of the present disclosure, the recognition module can further comprises: a first recognition module configured to calculate the similarity between paired features, and determining M features of the object to be inspected with similarities higher than any other features as the features of the suspect object.

According to the first aspect of the present disclosure, the recognition module can further comprises: a WiFi probe module configured to detect the mobile phone number of the suspect object.

According to the first aspect of the present disclosure, the recognition module can further comprises: a second recognition module configured to recognize the features of the suspect object from M features with similarities higher than any other features based on the mobile phone number of the suspect object.

In the second aspect of the present disclosure, there is provided an object recognition method, comprising: collecting information about an object to be inspected; acquiring an image of the object to be inspected, and acquiring multiple types of features of the object to be inspected by using a plurality of recognition methods based on the image of the object to be inspected; storing the information about the object to be inspected in association with the multiple types of features of the object to be inspected; tracking and capturing a suspect object to acquire an image of the suspect object, and acquiring multiple types of features of the suspect object by using the plurality of recognition methods based on the image of the suspect object; and recognizing identity information of the suspect object based on the multiple types of features of the suspect object and the multiple types of features of the object to be inspected which are stored in association with the information about the object to be inspected.

According to the second aspect of the present disclosure, the collecting information about the object to be inspected comprises: recognizing a mobile phone number of the object to be inspected based on a WiFi probe method.

According to a second aspect of the present disclosure, the acquiring an image of the object to be inspected and acquiring multiple types of features of the object to be inspected by using a plurality of recognition methods based on the image of the object to be inspected comprises: acquiring the image of the object to be inspected; and extracting a feature image of the object to be inspected from the image of the object to be inspected.

According to the second aspect of the present disclosure, the acquiring an image of the object to be inspected and acquiring multiple types of features of the object to be inspected by using a plurality of recognition methods based on the image of the object to be inspected further comprises: normalizing the feature image of the object to be inspected.

According to the second aspect of the present disclosure, the acquiring an image of the object to be inspected and acquiring multiple types of features of the object to be inspected by using a plurality of recognition methods based on the image of the object to be inspected further comprises: extracting features from the normalized feature image.

According to the second aspect of the present disclosure, the recognizing identity information of the suspect object based on the acquired multiple types of features of the suspect object and the multiple types of features of the object to be inspected which are stored in association with the information about the object to be inspected comprises: pairing the features of the suspect object with the stored features of the object to be inspected.

According to the second aspect of the present disclosure, the recognizing identity information of the suspect object based on the acquired multiple types of features of the suspect object and the multiple types of features of the object to be inspected which are stored in association with the information about the object to be inspected can further comprises: calculating a similarity between paired features, and determining M features of the object to be inspected with similarities higher than any other features as the features of the suspect object.

According to the second aspect of the present disclosure, the recognizing identity information of the suspect object based on the acquired multiple types of features of the suspect object and the multiple types of features of the object to be inspected which are stored in association with the information about the object to be inspected can further comprises: recognizing a mobile phone number of the suspect object based on a WiFi probe method.

According to the second aspect of the present disclosure, the recognizing identity information of the suspect object based on the acquired multiple types of features of the suspect object and the multiple types of features of the object to be inspected which are stored in association with the information about the object to be inspected can further comprises: recognizing the features of the suspect object from M features with similarities higher than any other features based on the mobile phone number of the suspect object.

In a third aspect of the present disclosure, there is provided a non-transitory computer readable medium having recorded thereon program code instructions capable of implementing the method according to any one of the second aspect.

According to a fourth aspect of the present disclosure, there is provided an electronic device, comprising: one or more processors; and a storage device for storing one or more programs, wherein the one or more programs, when executed by the one or more processors, cause the one or more processors to perform the method according to any one of the second aspect.

The present disclosure integrates face recognition, gait recognition, pedestrian re-recognition, WiFi probe recognition, iris recognition and other technologies for personnel recognition in complex scenes, which may better deal with personnel information recognition in complex scenes and acquire personnel information in a real time.

### BRIEF DESCRIPTION OF THE DRAWINGS

Fig. 1 illustrates a block diagram of an identity recognition system according to an example embodiment.
Fig. 2 illustrates a detailed block diagram of an information collection module according to an example embodiment.
Fig. 3 illustrates a detailed block diagram of a first video acquisition module according to an example embodiment.
Fig. 4 illustrates a detailed block diagram of an recognition module according to an example embodiment.
Fig. 5 illustrates a flowchart of a method for performing personnel recognition according to an example embodiment.
Fig. 6 illustrates a flow chart of a method of collecting identity information of a person entering the place according to an example embodiment.
Fig. 7 illustrates a detailed flow chart of a method of extracting the features of a person according to an example embodiment.
Fig. 8 illustrates a flow chart of a method for recognizing identity information of a suspect according to an example embodiment.
Fig. 9 illustrates a block diagram of an electronic device according to an example embodiment.

### DETAILED DESCRIPTION OF EMBODIMENTS

The specific embodiments of the disclosure will be described in detail below. It should be noted that the embodiments described herein are only for illustration and not for limitation of the disclosure. In the following description, in order to provide a thorough understanding of the disclosure, a large number of specific details are described. However, it will be apparent to those of ordinary skill in the art that the disclosure does not need to be implemented with these specific details. In other examples, in order to avoid confusion with the disclosure, well-known circuits, materials or methods are not specifically described.

Throughout the specification, the reference to "an embodiment", "embodiment", "an example" or "example" means that specific features, structures or characteristics described in combination with the embodiment or example are included in at least one embodiment of the disclosure. Therefore, the phrases "in an embodiment", "in embodiment", "an example" or "example" appearing in various parts of the entire specification do not necessarily refer to the same embodiment or example. In addition, specific features, structures, or characteristics may be combined in one or more embodiments or examples in any suitable combination and / or sub-combination.

It should be understood that when a component is said to be "coupled" or "connected" to another component, it may be directly coupled or connected to another component or there may be intermediate components. On the contrary, when a component is said to be "directly coupled" or "directly connected" to another component, there is no intermediate component.

In addition, the term "and/or" as used herein includes any and all combinations of one or more related listed items.

It will be understood that nouns in the singular form corresponding to the term may include one or more things, unless the context expressly indicates otherwise. As used herein, each phrase in phrases such as "A or B", "at least one of A and B", "at least one of A or B", "A, B or C", "at least one of A, B and C" and "at least one of A, B or C" may be included in all possible combinations of items listed together with a corresponding phrase in the plurality of phrases. As used herein, terms such as "1" and "2" or "first" and "second" may be used to make a simple distinction between the corresponding part and another part and do not limit the part in other aspects (for example, importance or order).

As used herein, the term "module" may include a unit implemented in hardware, software, or firmware and may be used interchangeably with other terms (for example, "logic," "logical block," "part," or "circuit"). A module may be a single integrated component adapted to perform one or more functions or the smallest unit or part of the single integrated component. For example, according to an embodiment, a module may be implemented in the form of an ASIC.

It should be understood that the various embodiments of the present disclosure and the terms used therein are not intended to limit the technical features described herein to specific embodiments, but include various changes, equivalents or alternative forms for the corresponding embodiments. Unless otherwise defined herein, all terms will give the widest possible explanation, including the meanings implied in the specification and those understood by those skilled in the art and / or defined in dictionaries, papers, etc.

In addition, it should be understood by those skilled in the art that the drawings provided herein are for the purpose of explanation, and the drawings are not necessarily drawn in proportion. For the description of the drawings, similar reference numerals may be used to refer to similar or related elements. An exemplary description of the present disclosure will be made below with reference to the accompanying drawings.

As face recognition technology, gait recognition technology, pedestrian re-recognition technology, WiFi probe recognition technology, iris recognition technology etc. can recognize people in a long distance, non-perception, and real-time way, they bring great convenience for personnel identity recognition. However, these technologies have their own characteristics and are suitable for different disclosures.

Face recognition technology can recognize the face in the video from a long distance, which makes it possible to recognize the pedestrian unconsciously, so as to recognize the pedestrian quickly and non-cooperatively. However, in the case of poor quality of face image and face occlusion, face recognition technology cannot effectively carry out face recognition.

The recognition distance of gait recognition technology can reach 50 meters without active cooperation of objects. Even if pedestrians walk with their backs to the camera tens of meters away from the camera, gait recognition technology can also recognize them. However, the recognition accuracy of gait recognition technology is lower than that of face recognition technology.

Pedestrian re-recognition technology can re-recognize the pedestrian in the video, without high-quality face image. Therefore, in the case of failure of face recognition technology, pedestrian re-recognition technology can be used for personnel identity recognition. However, the recognition accuracy of pedestrian re-recognition is lower than that of face recognition technology and gait recognition technology.

WiFi probe recognition technology can accurately obtain the mobile phone number of pedestrians, but the mobile phone number cannot be used as an independent personnel identity recognition method.

Iris recognition technology determines identity of people by comparing the features of iris image. It is a highly reliable, mature technology that does not require physical contact, but requires high image quality.

The disclosure provides a system and method for recognizing pedestrians by integrating face recognition technology, gait recognition technology, pedestrian recognition technology, WiFi probe recognition technology, iris recognition technology and identity card recognition technology, so as to improve the efficiency and accuracy of pedestrian recognition.

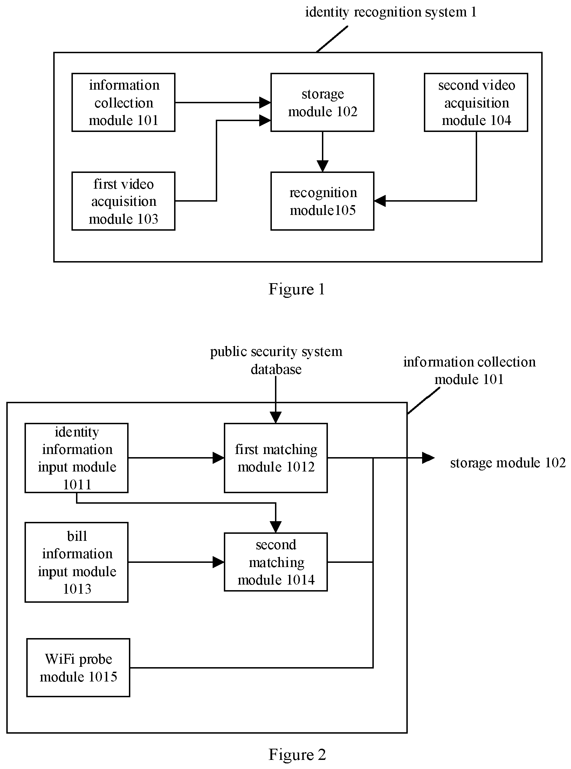

Fig.1 illustrates a block diagram of an identity recognition system 1 according to an example embodiment. The identity recognition system 1 can be applied to any place, such as airport, train station, bus station, stadium, or any other densely populated area.

As shown in the Fig.1, the identity recognition system 1 may include an information collection module 101, a storage module 102, a first video acquisition module 103, a second video acquisition module 104, and a recognition module 105.

The information collection module 101 is configured to collect information of a person entering the place. In an example, the information collection module 101 may be a device that manually inputs or automatically acquires an identity information of a person.

In an exemplary embodiment, the information collection module 101 may be arranged at the entrance of the place requiring security check, for acquiring a basic information of the person entering the place based on an identity card or other valid identity documents of the person entering the place.

In an example, the information collection module 101 may be an identity recognition device connected with a public security system, which is used to acquire the identity information of the person entering the place based on the identity card or other valid identity documents of the person entering the place, and at the same time, the acquired identity information is compared with suspect information stored in the public security system to recognize whether the person entering the place is a suspect.

In an example, the information collection module 101 may be a gate arranged at the entrance of a public transportation place such as an airport, a railway station, a bus station, etc., for scanning identity cards and ticket surfaces of the person entering the station.

In an example, the information collection module 101 may be a scanner arranged at the entrance of places such as exhibition halls, libraries, concerts, conference centers, etc., for scanning identity cards, tickets and/or library cards, etc.

In an example, the information collection module 101 may be a device that manually inputs the identity information of a person through an input device. For example, the input device may be a touchpad, touch screen, keyboard, keypad, mouse, or any combination thereof.

The first video acquisition module 103 may be configured to capture a video of a person entering the place, thereby acquiring a plurality of images of the person entering the place.

In an example, the first video acquisition module 103 may be a device arranged at the same position as the information collection module 101 or near the information collection module 101 for capture a video of a person receiving information collection by the information collection module 101.

The first video acquisition module 103 is configured to acquire multiple types of features of a person entering a place using multiple types of feature recognition techniques based on the acquired a plurality of images of the person entering the place.

The first video acquisition module 103 acquires face features, gait features, human body features, iris features, etc. of a person entering a place by using face recognition technology, gait recognition technology, pedestrian re-recognition technology, iris recognition technology, based on a plurality of images of the person entering the place

In an example, the first video acquisition module 103 may acquire bone features and the like of a person entering a place using any other technology, such as bone recognition technology, based on a plurality of images of the person entering the place.

It should be understood by those skilled in the art that the types and quantities of recognition techniques are not limited.

The first video acquisition module 103 is provided with one or more feature acquisition devices for acquiring face features, gait features, human body features, iris features. In an example, one of the feature acquisition devices may be a depth camera, which is used to acquire an skeleton image of a person, so as to acquire the human body features of a person. In another example, one of the feature acquisition devices may be a face recognition device for face recognition. In another example, one of the feature acquisition devices may be a gait feature acquisition device for gait acquisition. In another example, one of the feature acquisition devices may be an iris acquisition device for iris acquisition.

In an example, the number and type of feature acquisition devices in the first video acquisition module 103 are not limited.

In an example, the angle of view of the feature acquisition device in the first video acquisition device with respect to the person being captured may be the same or different.

When the perspective of the feature acquisition device is different from that of the captured person, there is a deviation between the same features acquired by the same feature acquisition device. At this time, the acquired image can be registered, and then the feature acquisition device can extract the feature based on the registered image.

The storage module 102 may be configured to store data, information, images, and the like generated in the process of personnel recognition.

In an exemplary embodiment, the personnel information acquired by the information collection module 101 may be stored in the storage module 102 in association with the personnel features acquired by the first video acquisition module 103.

In an exemplary embodiment, the storage module 102 may be provided with non-volatile memory, which may always store data when the storage module 102 is powered on or powered off.

The second video acquisition module 104 is configured to track and capture any suspect with abnormal behavior, manner, etc., so as to acquire an image of the suspect.

The second video acquisition module 104 is the same module as the first video acquisition module 103. The second video acquisition module 104 may be a module having a longer capturing distance, better imaging quality and clearer image than the first video acquisition device 103.

The second video acquisition device 104 is configured to acquire the face features, gait features, human body features and iris features of the suspect using face recognition technology, gait recognition technology, pedestrian re-recognition technology, iris recognition technology, based on the image of the suspect.

As shown above, the second video acquisition device 104 may be configured to acquire features using any existing or future development of recognition techniques.

It should be understood by those skilled in the art that the types and quantities of recognition techniques are not limited.

The recognition module 105 may be configured to match the features of the suspect acquired by the second video acquisition device 104 with the features stored in the storage module 102 to recognize the suspect's information.

Fig. 2 illustrates a detailed block diagram of an example of an information collection module 101 according to an example embodiment. The information collection module 101 shown in Fig. 2 is only provided for illustrative purposes, and the present disclosure is not limited thereto.

As shown in Fig. 2, the information collection module 101 may include an identity information input module 1011, a first matching module 1012, a bill information input module 1013, a second matching module 1014, and a WiFi probe module 1015.

The identity information input module 1011 can be configured to input the identity information of the person entering the place, such as name, age, gender, native place, etc.

The first matching module 1012 can be configured to receive the identity information of a person from the identity information input module 1011, and match the received identity information with the suspect information in the suspect information database of the public security system, so as to recognize whether the person entering the place is the suspect.

The bill information input module 1013 can be configured to input the bill information of the person entering the place. The bill information can be, for example, the person to whom the bill belongs, the destination of the person, the car number, the parking lot number, etc.

The second matching module 1014 can be configured to match the identity information of the person acquired by the identity information input module 1011 with the information of the person to whom the bill belongs acquired by the bill information input module 1013 to determine whether the person entering the place and the person to whom the bill belongs are the same.

When the first matching module 1012 determines that the person entering the place is not a suspect, and the second matching module 1014 determines that the person to whom the bill belongs is the same as the person entering the place, the person is allowed to enter the place. In addition, the first matching module 1012 and the second matching module 1014 send to the storage module 102 the identity information of the person acquired by the identity information input module 1011 and the information acquired by the bill information input module 1013.

The WiFi probe module 1015 can be configured to acquire the mobile phone number information of the person entering the place.

According to an example embodiment, the identity information of a person acquired by the identity information input module 1011, the information acquired by the bill information input module 1013, and the mobile phone number information acquired by the WiFi probe module 1015 are stored in association with the storage module 102.

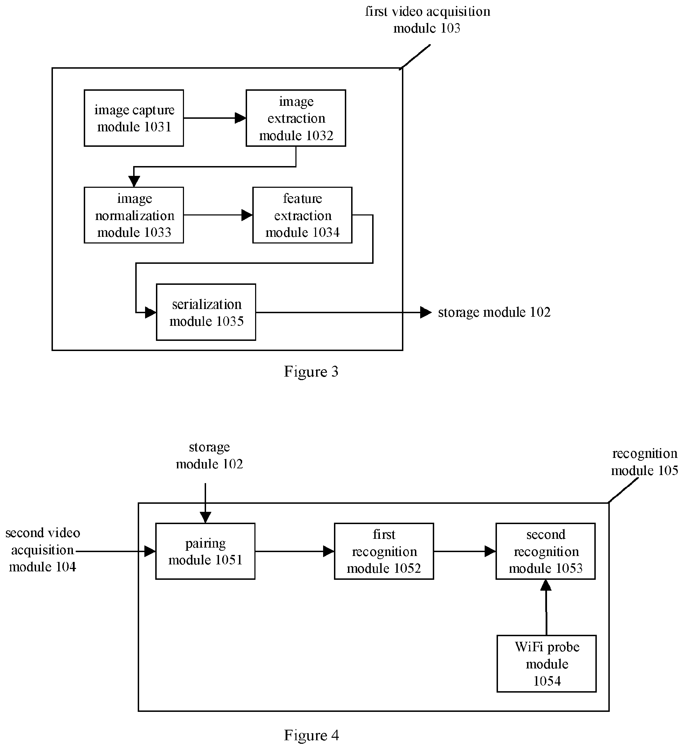

Fig. 3 illustrates a block diagram of an example of a first video acquisition module 103 according to an example embodiment. The first video acquisition module 103 shown in Fig. 3 is only provided for illustrative purposes, and the present disclosure is not limited thereto.

As shown in Fig. 3, the first video acquisition module 103 includes an image capture module 1031, an image extraction module 1032, an image normalization module 1033, a feature extraction module 1034, and a serialization module 1035.

The image capture module 1031 can be configured to track and capture the suspect with strange behavior and strange appearance entering the place, so as to acquire the image of the person.

The image capture module 1031 may include any capturing device such as a depth camera, an infrared camera, a millimeter wave camera, a terahertz camera, and the like.

The image capture module 1031 may include one or more capturing devices, and the number of image capture modules 1031 may be one or more.

The image extraction module 1032 is configured to receive the captured image from the image capture module 1031, and extract the face image, gait image, human body image and human eye image of the suspect from the image.

The image normalization module 1033 is configured to receive the extracted face image, gait image, human body image and human eye image from the image extraction module 1032, and normalize each received image.

For example, the image normalization module 1033 may be configured to normalize face images, gait images, human body images, and human eye images with pixel values between 0 and 255 to pixel values between 0 and 1. By normalizing the image, we can extract features more quickly, efficiently and accurately.

Feature extraction module 1034 is configured to receive normalized face image, gait image, human body image and human eye image from image normalization module 1033, and extract face feature, gait feature, human body feature and iris feature based on each image.

The serialization module 1035 is configured to receive the extracted face feature, gait feature, human body feature and iris feature from the feature extraction module 1034, and serialize the received images. For example, face features are represented by 128 digits, gait features are represented by 234 digits, human body features are represented by 140 digits, and iris features are represented by 220 digits. At this time, the numbers representing each feature are sorted to form a serialized feature set.

The serialization module 1035 is also configured to store the serialized feature set in the storage module 102.

The second video acquisition module 104 is configured to be the same as the first video acquisition module 103. In order to avoid repeating the description, the structure of the second video acquisition module 104 will not be described again.

Fig. 4 illustrates a block diagram of an example of an recognition module 105 according to an example embodiment. As shown in the figure, the recognition module 105 may include a pairing module 1051, a first recognition module 1052, a second recognition module 1053, and a WiFi probe module 1054.

The pairing module 1051 is configured to pair the serialized feature set about the suspect acquired by the second video acquisition module 104 with each serialized feature set stored in the storage module 102. For example, in the case where N serialized feature sets are stored in the storage module 102, the pairing module 1051 will first pair the serialized feature set acquired by the second video acquisition module 104 with the first serialized feature set among the N serialized feature sets, and when the first recognition module 1052 determines the matching rate between the first serialized feature set and the serialized feature set acquired by the second video acquisition module 104, the pairing module 1051 will then pair the serialized feature set acquired by the second video acquisition module 104 with the second serialized feature set, and so on.

The first recognition module 1052 may be configured to receive a paired feature set from the pairing module 1051 and determine whether the paired feature set is a matched feature set.

The first recognition module 1052 may include an recognition model established in advance by a neural network, which may be configured to determine the similarity between the serialized feature set input from the second video acquisition module 104 and each serialized feature set stored in the storage module 102.

The first recognition module 1052 may also be configured to rank each determined similarity.

The WiFi probe module 1054 can be configured to detect the mobile phone number of the suspect.

The second recognition module 1053 can be configured to match the first M serialized feature set with the highest similarity acquired by the first recognition module 1052 with the mobile phone number acquired by the WiFi probe, so as to match the suspect's feature set in the first M serialized feature set.

In the case of few people around the suspect, the WiFi probe can accurately detect a mobile phone number. Thus, the suspect can be accurately identified from the first M serialized feature sets.

In the case of denser people around the suspect, the WiFi probe can detect a plurality of mobile phone numbers. Thus, a plurality of suspects can be identified from the first M serialized feature set. Thus, the information of the suspect can be further reduced.

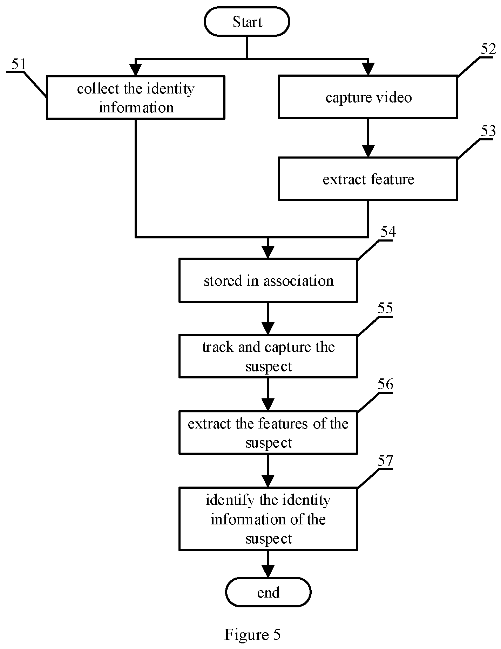

Fig. 5 illustrates a flow chart of an example method for personnel recognition according to an example embodiment. As shown in Figure 5, at step 51, collect the identity information of the person entering the place, such as name, gender, age, native place, etc.

At step 52, a person entering the place is captured to acquire an image of the person entering the place.

The step 51 and the step 52 are carried out at the same time or in sequence.

At step 53, features about the person entering the place are extracted based on the image acquired at step 52. We extract the face features, gait features, human body features and iris features of people entering the place.

At step 54, the identity information acquired at step 51 is stored in association with the features acquired at step 53.

At step 55, the suspect in the place is tracked and captured to acquire a plurality of images of the suspect.

At step 56, features of the suspect are extracted based on the image acquired at step 55.

At step 57, the features of the suspect extracted at step 56 is matched with the feature stored in step 54 in association with the identity information to recognize the identity information of the suspect.

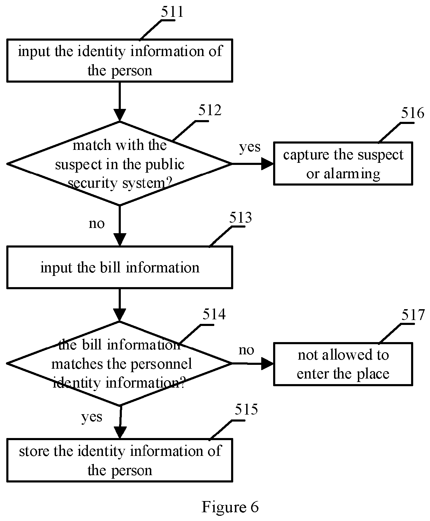

Fig. 6 illustrates a flowchart of an example method of collecting identity information of a person entering the place according to an example embodiment. As shown in Fig. 6, at step 511, input the identity information of the person entering the place, for example, acquire the identity information of the person by scanning the person's identity card or other valid documents. Alternatively, the identity information of a person may also include the mobile phone number of the person detected by the WiFi probe.
At step 512, the identity information of the person inputted at step 511 is compared with the suspect information in the public security system to determine whether the person inputted the identity information is a suspect.

When the inputted identity information matches the suspect's information in the public security system (the "Yes" at step 512), the processing proceeds to step 516 to capture the suspect or take measures such as alarming.

When the inputted identity information does not match the suspect's information in the public security system (the "No" at step 512), the processing proceeds to step 513.

At step 513, input the bill information of the bill held by the person entering the place, such as destination, vehicle number, car number, seat number, bill owner information, etc.

At step 514, the bill information inputted in step 513 is compared with the personnel identity information inputted in step 511. When the bill information matches the personnel identity information (the "Yes" at step 514), the processing proceeds to step 515. At step 515, the identity information of the person is stored. In case that the bill information does not match the personnel identity information (the "No" at step 514), the processing proceeds to step 517. At step 517, the person is not allowed to enter the site.

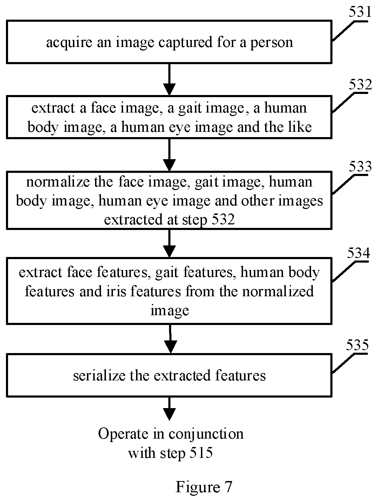

Fig. 7 illustrates a detailed flowchart of a method for extracting the features of a person. As shown in Fig. 7, at step 531, an image captured for a person is acquired.

At step 532, a face image, a gait image, a human body image, a human eye image of the captured person are extracted from the acquired image.

At step 533, the face image, gait image, human body image, human eye image extracted at step 532 are normalized.

At step 534, the face features, gait features, human body features and iris features of the captured person are extracted, based on the face image, gait image, human body image, human eye image, normalized at step 533.

At step 535, the face features, gait features, human body features and iris features acquired at step 534 are serialized.

After step 535, in combination with the step 515 in Fig. 6, the operation of step 54 in Fig. 5 is jointly performed, that is, the identity information of a person is stored in association with the serialized feature set.

The operation at 56 in Fig. 5 is similar to the operation described in steps 531 to 535, and will not be repeated here for the purpose of simplifying the description.

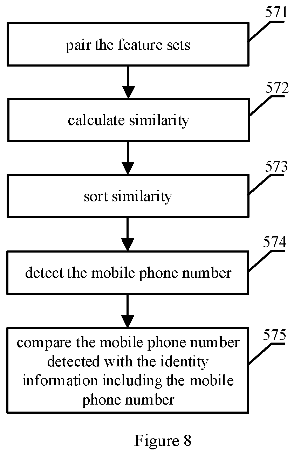

Fig. 8 illustrates a flowchart of an example method for recognizing the identity information of a suspect according to an example embodiment. As shown in Fig. 8, at step 571, a serialized feature set consisting of the face features, gait features, human body features, iris features and the like of the suspect is sequentially paired with a plurality of feature sets stored in association. For example, when there are N associated feature sets stored, the suspect's feature set can be first paired with the stored first feature set, and then the suspect's feature set can be paired with the second feature set, and so on.

At step 572, the similarity between each pair of feature sets is calculated in turn. For example, first calculate the similarity between the paired suspect's feature set and the first feature set, and then calculate the similarity between the paired suspect's feature set and the second feature set, and so on.

At step 573, each similarity calculated in turn is sorted.

At step 574, detect the suspect's mobile phone number through WiFi probe and other technologies.

At step 575, the mobile phone number of the suspect detected at step 574 is compared with the first M feature set with the highest similarity. Since the feature set is associated with the identity information including the mobile phone number, the identity information of the suspect can be identified by comparing the mobile phone number.

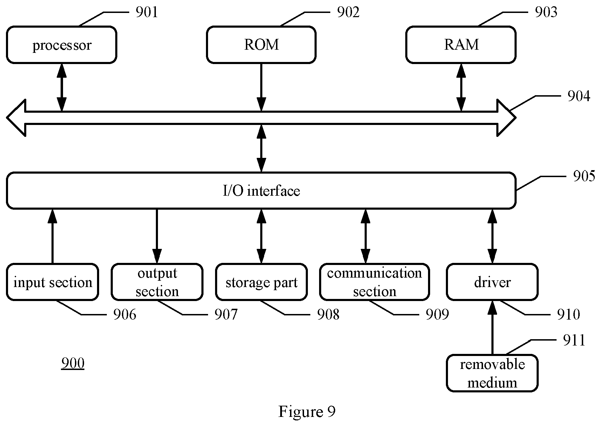

Fig. 9 schematically illustrates a block diagram of an electronic device adapted to implement the method described above, according to an embodiment of the present disclosure. The electronic device shown in Fig. 9 is only an example and should not impose any restrictions on the function and scope of use of the embodiment of the present disclosure.

As shown in Fig. 9, the electronic device 900 according to the embodiment of the present disclosure includes a processor 901, which can perform various appropriate actions and processes according to a program stored in a read only memory (ROM) 902 or a program loaded from a storage portion 908 into a random access memory (RAM) 903. Processor 901 may include, for example, a general-purpose microprocessor (such as CPU), an instruction set processor, and/or a related chipset and/or a special-purpose microprocessor (such as disclosure specific integrated circuit (ASIC)), and so on. Processor 901 may also include on-board memory for caching purposes. Processor 901 may include a single processing unit or a plurality of processing units for performing different actions of a method flow according to the embodiment of the present disclosure.

In RAM 903, various programs and data necessary for the operation of the system 900 are stored. Processor 901, ROM 902, and RAM 903 are connected to each other through bus 904. The processor 901 performs various operations of the method flow according to the embodiment of the present disclosure by executing the programs in ROM 902 and / or RAM 903. It should be noted that the programs can also be stored in one or more memories other than ROM 902 and RAM 903. Processor 901 may also perform various operations of the method flow according to the embodiment of the present disclosure by executing the programs stored in the one or more memories.

According to an embodiment of the present disclosure, system 900 may also include an input/output (I/O) interface 905, which is also connected to bus 904. The system 900 may also include one or more of the following components connected to the I/O interface 905: an input section 906 including a keyboard, a mouse, etc.; an output section 907 including a cathode-ray tube (CRT), a liquid crystal display (LCD), a speaker, etc.; a storage part 908 including a hard disk, etc.; and a communication section 909 including a network interface card, such as a LAN card, a modem, etc. The communication section 909 performs communication processing via a network such as the Internet. The drive 910 is also connected to the I/O interface 905 as required. The removable medium 911, such as a disk, an optical disc, a magneto-optical disc, a semiconductor memory, and the like, is mounted on the drive 910 as required so that the computer program read from it can be mounted on the storage portion 908 as required.

According to the embodiment of the present disclosure, the method flow according to the embodiment of the present disclosure may be implemented as a computer software program. For example, the embodiment of the present disclosure includes a computer program product, which includes a computer program hosted on a computer-readable storage medium, and the computer program includes program code for executing the method shown in the flowchart. In such an embodiment, the computer program can be downloaded and installed from the network through the communication section 909, and/or installed from the removable medium 911. When the computer program is executed by the processor 901, the above functions defined in the system of the present disclosure embodiment are executed. According to the embodiment of the present disclosure, the system, apparatus, device, module, unit and the like described above can be realized by a computer program module.

The present disclosure also provides a computer-readable storage medium, which may be included in the apparatus/device/system described in the above embodiment, or it may exist alone without being assembled into the apparatus/device/system. The computer-readable storage medium carries one or more programs, and when the one or more programs are executed, the method according to the embodiment of the present disclosure is implemented.

According to an embodiment of the present disclosure, the computer-readable storage medium may be a non-volatile computer-readable storage medium. For example, it may include but not limited to: portable computer disk, hard disk, random access memory (RAM), read only memory (ROM), erasable programmable read only memory (EPROM or flash memory), portable compact disk read only memory (CD-ROM), optical storage device, magnetic storage device, or any suitable combination of the above. In the present disclosure, the computer-readable storage medium may be any tangible medium containing or storing a program that can be used by or in combination with an instruction execution system, apparatus, or device.

For example, according to an embodiment of the present disclosure, the computer-readable storage medium may include one or more memories other than ROM 902 and/or RAM 903 and/or ROM 902 and RAM 903 described above.

Although a plurality of components are shown in each of the above block diagrams, it should be understood by those skilled in the art that embodiments of the disclosure can be implemented in the absence of one or more components or combining certain components.

Although each step has been described above in accordance with the order shown in the drawings, it should be understood by those skilled in the art that each step can be performed in a different order, or embodiments of the present disclosure can be implemented without one or more of the above steps.

It is understood from the foregoing that the electronic components of one or more systems or devices may include, but are not limited to, at least one processing unit, memory, and a communication bus or communication device coupling each component including memory to the processing unit. The system or device may include or have access to various device readable media. System memory may include device readable storage media in the form of volatile and/or non-volatile memory (e.g., read only memory (ROM) and/or random access memory (RAM)). System memory may also include operating system, disclosure program, other program modules, and program data by way of example rather than limitation.

Embodiments may be implemented as systems, methods, or program products. Therefore, embodiments may take the form of full hardware embodiments or embodiments including software (including firmware, resident software, microcode, etc.), which may be collectively referred to herein as "circuit", "module" or "system". In addition, embodiments may take the form of program products embodied in at least one device readable medium on which device readable program code is embodied.

A combination of device readable storage media can be used. In the context of this document, the device readable storage medium ("storage medium") may be any tangible non signal medium that may contain or store a program composed of program codes configured to be used by or in combination with an instruction execution system, device, or apparatus. For the purposes of the present disclosure, the storage medium or device shall be interpreted as non-transitory, i.e., excluding the signal or propagation medium.

The present disclosure is presented for illustration and description purposes, but is not intended to be exhaustive or restrictive. Many modifications and changes will be apparent to those skilled in the art. Embodiments are selected and described to illustrate principles and practical disclosures, and to enable those of ordinary skill in the art to understand various embodiments of the present disclosure with various modifications suitable for the specific purpose intended.

## Claims

1. A person recognition system (1), comprising:
an information collection module (101) configured to collect identity information about a person entering a place;
a first video acquisition module (103) configured to acquire a plurality of images of the person, and acquire multiple features of the person by applying a plurality of recognition methods to the plurality of images of the person, wherein the multiple features of the person comprise face features, gait features, human body features, and iris features of the person;
a storage module (102) configured to store the identity information about the person in association with the multiple features of the person;
a second video acquisition module (104) configured to track and capture a suspect person with abnormal behavior to acquire a plurality of images of the suspect person, and acquire multiple features of the suspect person by applying the plurality of recognition methods to the plurality of images of the suspect person, wherein the multiple features of the suspect person comprise face features, gait features, human body features, and iris features of the suspect person; and
a recognition module (105) configured to determine identity information of the suspect person based on the multiple features of the suspect person and the multiple features of the person in the storage module (102);
wherein the first video acquisition module (103) comprises: an image capture module (1031) configured to acquire the plurality of images of the person; an image extraction module (1032) configured to extract a face image, a gait image, a human body image, and a human eye image of the person from the plurality of images of the person; an image normalization module (1033) configured to normalize the face image, the gait image, the human body image, and the human eye image of the person; a feature extraction module (1034) configured to extract face features, gait features, human body features, and iris features from the normalized face image, the normalized gait image, the normalized human body image, and the normalized human eye image respectively; and a serialization module (1035) configured to serialize the extracted face features, the extracted gait features, the extracted human body features, and the extracted iris features to obtain serialized features of the person,
wherein the storage module (102) is configured to store the identity information about the person in association with the serialized features of the person;
wherein the second video acquisition module (104) is configured to extract a face image, a gait image, a human body image, and a human eye image of the suspect person from the plurality of images of the suspect person, normalize the face image, the gait image, the human body image, and the human eye image of the suspect person, extract face features, gait features, human body features, and iris features of the suspect person from the normalized face image, the normalized gait image, the normalized human body image, and the normalized human eye image of the suspect person respectively, and serialize the extracted face features, the extracted gait features, the extracted human body features, and the extracted iris features of the suspect person to obtain serialized features of the suspect person;
wherein the recognition module (105) is configured to pair the serialized features of the suspect person with the serialized features of the person stored in the storage module (102);
wherein the second video acquisition module is the same as the first video acquisition module.

2. The person recognition system (1) according to claim 1, wherein the information collection module (101) is configured to retrieve a mobile phone number of the person based on a WiFi probe method.

3. The person recognition system (1) according to claim 1, wherein the recognition module (105) comprises: a pairing module (1051) configured to pair the features of the suspect person acquired by the second video acquisition module with the features of the person which are stored in the storage module (102).

4. A person recognition method, comprising:
collecting information about a person entering a place (51);
acquiring a plurality of images of the person (52), and acquiring multiple features of the person by applying a plurality of recognition methods to the plurality of images of the person (53) , wherein the multiple features of the person comprise face features, gait features, human body features, and iris features of the person;
storing the information about the person in association with the multiple features of the person (54);
tracking and capturing a suspect person with abnormal behavior to acquire a plurality of images of the suspect person (55), and acquiring multiple features of the suspect person by applying the plurality of recognition methods to the plurality of images of the suspect person (56), wherein the multiple features of the suspect person comprise face features, gait features, human body features, and iris features of the suspect person; and
determining identity information of the suspect person based on the multiple features of the suspect person and the multiple features of the person (57);
wherein acquiring a plurality of images of the person (52) and acquiring multiple features of the person by applying a plurality of recognition methods to the plurality of images of the person (53) comprises: acquiring the plurality of images of the person (531); extracting a face image, a gait image, a human body image, and a human eye image of the person from the plurality of images of the person (532); normalizing the face image, the gait image, the human body image, and the human eye image of the person (533); extracting face features, gait features, human body features, and iris features from the normalized face image, the normalized gait image, the normalized human body image, and the normalized human eye image respectively (534); and serializing the extracted face features, the extracted gait features, the extracted human body features, and the extracted iris features to obtain serialized features of the person (535),
wherein storing the identity information about the person in association with the multiple features of the person (54) comprises storing the identity information about the person in association with the serialized features of the person;
wherein acquiring multiple features of the suspect person comprises extracting a face image, a gait image, a human body image, and a human eye image of the suspect person from the plurality of images of the suspect person, normalizing the face image, the gait image, the human body image, and the human eye image of the suspect person, extracting face features, gait features, human body features, and iris features of the suspect person from the normalized face image, the normalized gait image, the normalized human body image, and the normalized human eye image of the suspect person respectively, and serializing the extracted face features, the extracted gait features, the extracted human body features, and the extracted iris features of the suspect person to obtain serialized features of the suspect person;
wherein determining identity information of the suspect person comprises pairing the serialized features of the suspect person with the serialized features of the person stored in the storage module (102).

5. The person recognition method according to claim 4, wherein collecting identity information about the person (51) comprises:
retrieving a mobile phone number of the person based on a WiFi probe method (511).

6. The person recognition method according to claim 4 or 5, wherein determining identity information of the suspect person based on the multiple features of the suspect person and the multiple features of the person (57) further comprises:
pairing the features of the suspect person with the stored features of the person (571).

7. The person recognition method according to one of claims 4 to 6, wherein determining identity information of the suspect person based on the multiple features of the suspect person and the multiple features of the person (57) further comprises:
calculating a similarity between paired features, and determining M features of the person with similarities higher than any other features as being matched with the features of the suspect person (572, 573).

8. The person recognition method according to one of claims 4 to 6, wherein determining identity information of the suspect person based on the multiple features of the suspect person and the multiple features of the person (57) further comprises:
retrieving a mobile phone number of the suspect person based on a WiFi probe method (574).

9. The person recognition method according to one of claims 4 to 8, wherein determining identity information of the suspect person based on the multiple features of the suspect person and the multiple features of the person (57) further comprises:
recognizing the features of the suspect person from M features with similarities higher than any other features based on the mobile phone number of the suspect person (575).

10. A non-transitory computer readable medium, comprising program code instructions recorded thereon for implementing the method according to any one of claims 4 to 9.

11. An electronic device, comprising:
one or more processors;
a storage device for storing one or more programs, which causes the one or more processors to perform the method according to any one of claims 4 to 9 when executed by the one or more processors.

## Patentansprüche

1. Ein Personenerkennungssystem (1), umfassend:
ein Informationssammelmodul (101), konfiguriert, Identitätsinformationen über eine Person, die einen Ort betritt, zu sammeln;
ein erstes Videoerfassungsmodul (103), konfiguriert, eine Mehrzahl von Bildern der Person zu erfassen und mehrfache Merkmale der Person zu erfassen, indem eine Mehrzahl von Erkennungsverfahren auf die Mehrzahl von Bildern der Person angewendet wird, wobei die mehrfachen Merkmale der Person Gesichtsmerkmale, Gangmerkmale, menschliche Körpermerkmale und Irismerkmale der Person umfassen;
ein Speichermodul (102), konfiguriert, die Identitätsinformationen über die Person in Zuordnung zu den mehrfachen Merkmalen der Person zu speichern;
ein zweites Videoerfassungsmodul (104), konfiguriert, eine verdächtige Person mit abnormalem Verhalten zu verfolgen und aufzunehmen, um eine Mehrzahl von Bildern der verdächtigen Person zu erfassen, und mehrfache Merkmale der verdächtigen Person zu erfassen, indem die Mehrzahl von Erkennungsverfahren auf die Mehrzahl von Bildern der verdächtigen Person angewendet wird, wobei die mehrfachen Merkmale der verdächtigen Person Gesichtsmerkmale, Gangmerkmale, menschliche Körpermerkmale und Irismerkmale der verdächtigen Person umfassen; und
ein Erkennungsmodul (105), konfiguriert, Identitätsinformationen der verdächtigen Person basierend auf den mehrfachen Merkmalen der verdächtigen Person und den mehrfachen Merkmalen der Person im Speichermodul (102) zu bestimmen;
wobei das erste Videoerfassungsmodul (103) umfasst: ein Bildaufnahmemodul (1031), konfiguriert, die Mehrzahl von Bildern der Person zu erfassen; ein Bildextraktionsmodul (1032), konfiguriert, ein Gesichtsbild, ein Gangbild, ein menschliches Körperbild und ein menschliches Augenbild der Person aus der Mehrzahl von Bildern der Person zu extrahieren; ein Bildnormierungsmodul (1033), konfiguriert, das Gesichtsbild, das Gangbild, das menschliche Körperbild und das menschliche Augenbild der Person zu normalisieren; ein Merkmalextraktionsmodul (1034), konfiguriert, Gesichtsmerkmale, Gangmerkmale, menschliche Körpermerkmale und Irismerkmale jeweils aus dem normalisierten Gesichtsbild, dem normalisierten Gangbild, dem normalisierten menschlichen Körperbild und dem normalisierten menschlichen Augenbild zu extrahieren; und ein Serialisierungsmodul (1035), konfiguriert, die extrahierten Gesichtsmerkmale, die extrahierten Gangmerkmale, die extrahierten menschlichen Körpermerkmale und die extrahierten Irismerkmale zu serialisieren, um serialisierte Merkmale der Person zu erhalten,
wobei das Speichermodul (102) konfiguriert ist, die Identitätsinformationen über die Person in Zuordnung zu den serialisierten Merkmalen der Person zu speichern;
wobei das zweite Videoerfassungsmodul (104) konfiguriert ist, ein Gesichtsbild, ein Gangbild, ein menschliches Körperbild und ein menschliches Augenbild der verdächtigen Person aus der Mehrzahl von Bildern der verdächtigen Person zu extrahieren, das Gesichtsbild, das Gangbild, das menschliche Körperbild und das menschliche Augenbild der verdächtigen Person zu normalisieren, Gesichtsmerkmale, Gangmerkmale, menschliche Körpermerkmale und Irismerkmale der verdächtigen Person jeweils aus dem normalisierten Gesichtsbild, dem normalisierten Gangbild, dem normalisierten menschlichen Körperbild und dem normalisierten menschlichen Augenbild der verdächtigen Person zu extrahieren und die extrahierten Gesichtsmerkmale, die extrahierten Gangmerkmale, die extrahierten menschlichen Körpermerkmale und die extrahierten Irismerkmale der verdächtigen Person zu serialisieren, um serialisierte Merkmale der verdächtigen Person zu erhalten;
wobei das Erkennungsmodul (105) konfiguriert ist, die serialisierten Merkmale der verdächtigen Person mit den im Speichermodul (102) gespeicherten serialisierten Merkmalen der Person zu paaren;
wobei das zweite Videoerfassungsmodul dasselbe ist wie das erste Videoerfassungsmodul.

2. Das Personenerkennungssystem (1) nach Anspruch 1, wobei das Informationssammelmodul (101) konfiguriert ist, eine Mobiltelefonnummer der Person basierend auf einem WiFi-Probe-Verfahren abzurufen.

3. Das Personenerkennungssystem (1) nach Anspruch 1, wobei das Erkennungsmodul (105) umfasst: ein Paarungsmodul (1051), konfiguriert, die Merkmale der verdächtigen Person, die durch das zweite Videoerfassungsmodul erfasst sind, mit den Merkmalen der Person, die im Speichermodul (102) gespeichert sind, zu paaren.

4. Ein Personenerkennungsverfahren, umfassend:
Sammeln von Informationen über eine Person, die einen Ort betritt (51);
Erfassen einer Mehrzahl von Bildern der Person (52) und Erfassen mehrfacher Merkmale der Person durch Anwenden einer Mehrzahl von Erkennungsverfahren auf die Mehrzahl von Bildern der Person (53), wobei die mehrfachen Merkmale der Person Gesichtsmerkmale, Gangmerkmale, menschliche Körpermerkmale und Irismerkmale der Person umfassen;
Speichern der Informationen über die Person in Zuordnung zu den mehrfachen Merkmalen der Person (54);
Verfolgen und Aufnehmen einer verdächtigen Person mit abnormalem Verhalten, um eine Mehrzahl von Bildern der verdächtigen Person zu erfassen (55), und Erfassen mehrfacher Merkmale der verdächtigen Person durch Anwenden der Mehrzahl von Erkennungsverfahren auf die Mehrzahl von Bildern der verdächtigen Person (56), wobei die mehrfachen Merkmale der verdächtigen Person Gesichtsmerkmale, Gangmerkmale, menschliche Körpermerkmale und Irismerkmale der verdächtigen Person umfassen; und
Bestimmen von Identitätsinformationen der verdächtigen Person basierend auf den mehrfachen Merkmalen der verdächtigen Person und den mehrfachen Merkmalen der Person (57);
wobei das Erfassen einer Mehrzahl von Bildern der Person (52) und das Erfassen mehrfacher Merkmale der Person durch Anwenden einer Mehrzahl von Erkennungsverfahren auf die Mehrzahl von Bildern der Person (53) umfasst: Erfassen der Mehrzahl von Bildern der Person (531); Extrahieren eines Gesichtsbildes, eines Gangbildes, eines menschlichen Körperbildes und eines menschlichen Augenbildes der Person aus der Mehrzahl von Bildern der Person (532); Normalisieren des Gesichtsbildes, des Gangbildes, des menschlichen Körperbildes und des menschlichen Augenbildes der Person (533); Extrahieren von Gesichtsmerkmalen, Gangmerkmalen, menschlichen Körpermerkmalen und Irismerkmalen jeweils aus dem normalisierten Gesichtsbild, dem normalisierten Gangbild, dem normalisierten menschlichen Körperbild und dem normalisierten menschlichen Augenbild (534); und Serialisieren der extrahierten Gesichtsmerkmale, der extrahierten Gangmerkmale, der extrahierten menschlichen Körpermerkmale und der extrahierten Irismerkmale, um serialisierte Merkmale der Person zu erhalten (535),
wobei das Speichern der Identitätsinformationen über die Person in Zuordnung zu den mehrfachen Merkmalen der Person (54) umfasst, die Identitätsinformationen über die Person in Zuordnung zu den serialisierten Merkmalen der Person zu speichern;
wobei das Erfassen mehrfacher Merkmale der verdächtigen Person umfasst, ein Gesichtsbild, ein Gangbild, ein menschliches Körperbild und ein menschliches Augenbild der verdächtigen Person aus der Mehrzahl von Bildern der verdächtigen Person zu extrahieren, das Gesichtsbild, das Gangbild, das menschliche Körperbild und das menschliche Augenbild der verdächtigen Person zu normalisieren, Gesichtsmerkmale, Gangmerkmale, menschliche Körpermerkmale und Irismerkmale der verdächtigen Person jeweils aus dem normalisierten Gesichtsbild, dem normalisierten Gangbild, dem normalisierten menschlichen Körperbild und dem normalisierten menschlichen Augenbild der verdächtigen Person zu extrahieren und die extrahierten Gesichtsmerkmale, die extrahierten Gangmerkmale, die extrahierten menschlichen Körpermerkmale und die extrahierten Irismerkmale der verdächtigen Person zu serialisieren, um serialisierte Merkmale der verdächtigen Person zu erhalten;
wobei das Bestimmen von Identitätsinformationen der verdächtigen Person umfasst, die serialisierten Merkmale der verdächtigen Person mit den im Speichermodul (102) gespeicherten serialisierten Merkmalen der Person zu paaren.

5. Das Personenerkennungsverfahren nach Anspruch 4, wobei das Sammeln von Identitätsinformationen über die Person (51) umfasst:
Abrufen einer Mobiltelefonnummer der Person basierend auf einem WiFi-Probe-Verfahren (511).

6. Das Personenerkennungsverfahren nach Anspruch 4 oder 5, wobei das Bestimmen von Identitätsinformationen der verdächtigen Person basierend auf den mehrfachen Merkmalen der verdächtigen Person und den mehrfachen Merkmalen der Person (57) ferner umfasst:
Paaren der Merkmale der verdächtigen Person mit den gespeicherten Merkmalen der Person (571).

7. Das Personenerkennungsverfahren nach einem der Ansprüche 4 bis 6, wobei das Bestimmen von Identitätsinformationen der verdächtigen Person basierend auf den mehrfachen Merkmalen der verdächtigen Person und den mehrfachen Merkmalen der Person (57) ferner umfasst:
Berechnen einer Ähnlichkeit zwischen gepaarten Merkmalen und Bestimmen von M Merkmalen der Person mit Ähnlichkeiten, die höher sind als alle anderen Merkmale, als mit den Merkmalen der verdächtigen Person übereinstimmend (572, 573).

8. Das Personenerkennungsverfahren nach einem der Ansprüche 4 bis 6, wobei das Bestimmen von Identitätsinformationen der verdächtigen Person basierend auf den mehrfachen Merkmalen der verdächtigen Person und den mehrfachen Merkmalen der Person (57) ferner umfasst:
Abrufen einer Mobiltelefonnummer der verdächtigen Person basierend auf einem WiFi-Probe-Verfahren (574).

9. Das Personenerkennungsverfahren nach einem der Ansprüche 4 bis 8, wobei das Bestimmen von Identitätsinformationen der verdächtigen Person basierend auf den mehrfachen Merkmalen der verdächtigen Person und den mehrfachen Merkmalen der Person (57) ferner umfasst:
Erkennen der Merkmale der verdächtigen Person aus den M Merkmalen mit Ähnlichkeiten, die höher sind als alle anderen Merkmale, basierend auf der Mobiltelefonnummer der verdächtigen Person (575).

10. Ein nicht flüchtiges computerlesbares Medium, umfassend Programmcodes, die darauf aufgezeichnet sind, zur Umsetzung des Verfahrens nach einem der Ansprüche 4 bis 9.

11. Eine elektronische Vorrichtung, umfassend:
einen oder mehrere Prozessoren;
eine Speichervorrichtung zum Speichern von einem oder mehreren Programmen, die, wenn sie von den einen oder mehreren Prozessoren ausgeführt werden, die einen oder mehreren Prozessoren veranlassen, das Verfahren nach einem der Ansprüche 4 bis 9 auszuführen.

## Revendications

1. Système de reconnaissance de personne (1) comprenant:
un module de collecte d'informations (101) conçu pour collecter des informations sur l'identité d'une personne entrant dans un lieu;
un premier module d'acquisition vidéo (103) conçu pour acquérir une pluralité d'images de la personne et pour acquérir de multiples caractéristiques de la personne en appliquant plusieurs procédés de reconnaissance à la pluralité d'images de la personne, les multiples caractéristiques de la personne comprenant les caractéristiques du visage, de la démarche, du corps humain et de l'iris de la personne;
un module de stockage (102) conçu pour stocker les informations relatives à l'identité de la personne en association avec les multiples caractéristiques de la personne;
un second module d'acquisition vidéo (104) conçu pour suivre et capturer une personne suspecte ayant un comportement anormal afin d'acquérir une pluralité d'images de la personne suspecte et pour acquérir de multiples caractéristiques de la personne suspecte en appliquant la pluralité de procédés de reconnaissance à la pluralité d'images de la personne suspecte, les multiples caractéristiques de la personne suspecte comprenant les caractéristiques du visage, de la démarche, du corps humain et de l'iris de la personne suspecte; et
un module de reconnaissance (105) conçu pour déterminer les informations relatives à l'identité de la personne suspecte sur la base des multiples caractéristiques de la personne suspecte et des multiples caractéristiques de la personne dans le module de stockage (102);
dans lequel le premier module d'acquisition vidéo (103) comprend: un module de capture d'images (1031) conçu pour acquérir la pluralité d'images de la personne; un module d'extraction d'images (1032) conçu pour extraire une image du visage, une image de la démarche, une image du corps humain et une image de l'œil humain de la personne à partir de la pluralité d'images de la personne; un module de normalisation d'images (1033) conçu pour normaliser l'image du visage, l'image de la démarche, l'image du corps humain et l'image de l'œil humain de la personne; un module d'extraction de caractéristiques (1034) conçu pour extraire respectivement les caractéristiques du visage, les caractéristiques de la démarche, les caractéristiques du corps humain et les caractéristiques de l'iris à partir de l'image du visage normalisée, de l'image de la démarche normalisée, de l'image du corps humain normalisée et de l'image de l'œil humain normalisée; et un module de sérialisation (1035) conçu pour sérialiser les caractéristiques du visage extraites, les caractéristiques de la démarche extraites, les caractéristiques du corps humain extraites et les caractéristiques de l'iris extraites afin d'obtenir des caractéristiques sérialisées de la personne,
dans lequel le module de stockage (102) est conçu pour stocker les informations relatives à l'identité de la personne en association avec les caractéristiques sérialisées de la personne;
dans lequel le second module d'acquisition vidéo (103) est conçu pour extraire une image du visage, une image de la démarche, une image du corps humain et une image de l'œil humain de la personne suspecte à partir de la pluralité d'images de la personne suspecte; pour normaliser l'image du visage, l'image de la démarche, l'image du corps humain et l'image de l'œil humain de la personne; pour extraire respectivement les caractéristiques du visage, les caractéristiques de la démarche, les caractéristiques du corps humain et les caractéristiques de l'iris à partir de l'image du visage normalisée, de l'image de la démarche normalisée, de l'image du corps humain normalisée et de l'image de l'œil humain normalisée; et pour sérialiser les caractéristiques du visage extraites, les caractéristiques de la démarche extraites, les caractéristiques du corps humain extraites et les caractéristiques de l'iris extraites afin d'obtenir des caractéristiques sérialisées de la personne;
dans lequel le module de reconnaissance (105) est conçu pour associer les caractéristiques sérialisées de la personne suspecte aux caractéristiques sérialisées de la personne stockée dans le module de stockage (102);
dans lequel le deuxième module d'acquisition vidéo est le même que le premier module d'acquisition vidéo.

2. Système de reconnaissance de personne (1) selon la revendication 1, dans lequel le module de collecte d'informations (101) est conçu pour récupérer un numéro de téléphone mobile de la personne sur la base d'un procédé de sondage WiFi.

3. Système de reconnaissance de personne (1) selon la revendication 1, dans lequel le module de reconnaissance (105) comprend: un module de mise en correspondance (1051) conçu pour mettre en correspondance les caractéristiques de la personne suspecte acquises par le second module d'acquisition vidéo avec les caractéristiques de la personne qui sont stockées dans le module de stockage (102).

4. Procédé de reconnaissance de personne, comprenant:
la collecte d'informations concernant une personne entrant dans un lieu (51);
l'acquisition d'une pluralité d'images de la personne (52) et l'acquisition de multiples caractéristiques de la personne en appliquant plusieurs procédés de reconnaissance à la pluralité d'images de la personne (53), les multiples caractéristiques de la personne comprenant les caractéristiques du visage, de la démarche, du corps humain et de l'iris de la personne;
le stockage des informations relatives à la personne en association avec les multiples caractéristiques de la personne (54);
le suivi et la capture d'une personne suspecte ayant un comportement anormal afin d'acquérir une pluralité d'images de la personne suspecte (55) et l'acquisition de multiples caractéristiques de la personne suspecte en appliquant la pluralité de procédés de reconnaissance à la pluralité d'images de la personne suspecte (56), les multiples caractéristiques de la personne suspecte comprenant les caractéristiques du visage, de la démarche, du corps humain et de l'iris de la personne suspecte; et
la détermination des informations relatives à l'identité de la personne suspecte sur la base des multiples caractéristiques de la personne suspecte et des multiples caractéristiques de la personne dans le module de stockage (57);
dans lequel l'acquisition d'une pluralité d'images de la personne (52) et l'acquisition de multiples caractéristiques de la personne en appliquant une pluralité de procédé de reconnaissance à la pluralité d'images de la personne (53) consiste à: acquérir la pluralité d'images de la personne (531); extraire une image du visage, une image de la démarche, une image du corps humain et une image de l'œil humain de la personne à partir de la pluralité d'images de la personne (532); normaliser l'image du visage, l'image de la démarche, l'image du corps humain et l'image de l'œil humain de la personne (533); extraire respectivement les caractéristiques du visage, les caractéristiques de la démarche, les caractéristiques du corps humain et les caractéristiques de l'iris à partir de l'image du visage normalisée, de l'image de la démarche normalisée, de l'image du corps humain normalisée et de l'image de l'œil humain normalisée (534); et sérialiser les caractéristiques du visage extraites, les caractéristiques de la démarche extraites, les caractéristiques du corps humain extraites et les caractéristiques de l'iris extraites afin d'obtenir des caractéristiques sérialisées de la personne (535),
dans lequel le stockage des informations relatives à l'identité de la personne en association avec les multiples caractéristiques de la personne (54) comprend le stockage des informations relatives à l'identité de la personne en association avec les caractéristiques sérialisées de la personne;
dans lequel l'acquisition de multiples caractéristiques de la personne suspecte consiste à extraire une image du visage, une image de la démarche, une image du corps humain et une image de l'œil humain de la personne suspecte à partir de la pluralité d'images de la personne suspecte; à normaliser l'image du visage, l'image de la démarche, l'image du corps humain et l'image de l'œil humain de la personne; à extraire respectivement les caractéristiques du visage, les caractéristiques de la démarche, les caractéristiques du corps humain et les caractéristiques de l'iris à partir de l'image du visage normalisée, de l'image de la démarche normalisée, de l'image du corps humain normalisée et de l'image de l'œil humain normalisée; et à sérialiser les caractéristiques du visage extraites, les caractéristiques de la démarche extraites, les caractéristiques du corps humain extraites et les caractéristiques de l'iris extraites afin d'obtenir des caractéristiques sérialisées de la personne;
dans lequel la détermination d'informations relatives à l'identité de la personne suspecte consiste à associer les caractéristiques sérialisées de la personne suspecte aux caractéristiques sérialisées de la personne stockée dans le module de stockage (102).

5. Procédé de reconnaissance de personne selon la revendication 4, dans lequel la collecte d'informations relatives à l'identité de la personne (51) consiste à:
récupérer un numéro de téléphone de la personne en fonction d'un procédé de sondage WiFi (511).

6. Procédé de reconnaissance de personne selon la revendication 4 ou 5, dans lequel la détermination des informations relatives à l'identité de la personne suspecte sur la base des multiples caractéristiques de la personne suspecte et des multiples caractéristiques de la personne (57) consiste en outre à:
associer les caractéristiques de la personne suspecte aux caractéristiques stockées de la personne (571).

7. Procédé de reconnaissance de personne selon l'une quelconque des revendications 4 à 6, dans lequel la détermination des informations relatives à l'identité de la personne suspecte sur la base des multiples caractéristiques de la personne suspecte et des multiples caractéristiques de la personne (57) consiste en outre à :
calculer une similarité entre des caractéristiques associées et la détermination de M caractéristiques de la personne ayant des similarités plus élevées que toutes les autres caractéristiques mises en correspondance avec les caractéristiques de la personne suspecte (572, 573).

8. Procédé de reconnaissance de personne selon l'une quelconque des revendications 4 à 6, dans lequel les informations relatives à l'identité de la personne suspecte sur la base des multiples caractéristiques de la personne suspecte et des multiples caractéristiques de la personne(57) consiste en outre à:
récupérer un numéro de téléphone de la personne suspecte en fonction d'un procédé de sondage WiFi (574).

9. Procédé de reconnaissance de personne selon l'une quelconque des revendications 4 à 8, dans lequel les informations relatives à l'identité de la personne suspecte sur la base des multiples caractéristiques de la personne suspecte et des multiples caractéristiques de la personne(57) consiste en outre à:
reconnaitre les caractéristiques de la personne suspecte à partir de M caractéristiques présentant des similitudes plus élevées que toutes les autres caractéristiques sur la base du numéro de téléphone mobile de la personne suspecte (575).

10. Support lisible par ordinateur non transitoire sur lequel sont enregistrées des instructions de code de programme destinées à mettre en œuvre le procédé selon l'une quelconque des revendications 4 à 9.

11. Dispositif électronique, comprenant:
un ou plusieurs processeurs;
une mémoire destinée à stocker un ou plusieurs programmes qui amène le ou les processeurs à mettre en œuvre le procédé selon l'une quelconque des revendications 4 à 9, lorsqu'elles est exécutée par le ou les processeurs.
